(19) Europäisches Patentamt / European Patent Office / Office européen des brevets

(11) **EP 2 315 019 B1**

(12) **FASCICULE DE BREVET EUROPEEN**

(45) Date de publication et mention de la délivrance du brevet:
**06.11.2019 Bulletin 2019/45**

(51) Int Cl.:
**G01N 29/24** *(2006.01)* **G01N 21/17** *(2006.01)*

(21) Numéro de dépôt: **10188403.9**

(22) Date de dépôt: **21.10.2010**

(54) **DÉTECTEUR DE GAZ PHOTOACOUSTIQUE**

PHOTOAKUSTISCHER GASDETEKTOR

PHOTOACOUSTIC GAS DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2009 FR 0957377**

(43) Date de publication de la demande:
**27.04.2011 Bulletin 2011/17**

(73) Titulaires:
• **Commissariat à l'Énergie Atomique et aux Énergies Alternatives
75015 Paris (FR)**
• **Thales
92200 Neuilly Sur Seine (FR)**

(72) Inventeurs:
• **Nicoletti, Sergio
38650 SINARD (FR)**
• **Andreucci, Philippe
38430 MOIRANS (FR)**
• **Brun, Mickaël
38320 EYBENS (FR)**
• **Gidon, Serge
38140 LA MURETTE (FR)**
• **Marcadet, Xavier
92200 NEUILLY SUR SEINE (FR)**
• **Carras, Mathieu
92200 NEUILLY SUR SEINE (FR)**

(74) Mandataire: **Cabinet Beaumont
4, Place Robert Schuman
B.P. 1529
38025 Grenoble Cedex 1 (FR)**

(56) Documents cités:
WO-A2-2008/030250    FR-A1- 2 768 813
US-A- 5 869 749    US-A- 5 933 245
US-A1- 2005 210 956

• SAMARA L FIREBAUGH ET AL: "Miniaturization and Integration of Photoacoustic Detection with a Microfabricated ChemicalReactor System", JOURNAL OF MICROELECTROMECHANICAL SYSTEMS, IEEE SERVICE CENTER, PISCATAWAY, NJ, US, vol. 10, no. 2, 1 juin 2001 (2001-06-01), XP011034631, ISSN: 1057-7157
• WOJCIK M D ET AL: "Gas-phase photoacoustic sensor at 8.41 [mu]m using quartz tuning forks and amplitude-modulated quantum cascade lasers", APPLIED PHYSICS B ; LASERS AND OPTICS, SPRINGER, BERLIN, DE LNKD-DOI:10.1007/S00340-006-2394-8, vol. 85, no. 2-3, 8 août 2006 (2006-08-08) , pages 307-313, XP019442407, ISSN: 1432-0649

## Description

Domaine de l'invention

La présente invention concerne un dispositif de détection de gaz de type photoacoustique.

Exposé de l'art antérieur

Un dispositif de détection de gaz photoacoustique à éléments discrets utilisant un détecteur à diapason est décrit dans le brevet US 7 245 380 dont la figure 3 est reproduite en tant que figure 1 ci-jointe.

Ce dispositif comprend une source lumineuse (laser) 70 focalisée par un système optique 71 dans une enceinte 60 contenant un mélange gazeux à analyser. Le faisceau laser pulsé et condensé dans l'enceinte passe entre les bras d'un diapason 30. Le mélange gazeux est excité différemment par des longueurs d'onde spécifiques et, lorsque la lumière est adsorbée, il se produit une émission acoustique qui excite le diapason. L'amplitude de l'émission acoustique dépend alors de l'intensité lumineuse du faisceau laser mais surtout de la concentration des espèces gazeuses capables d'adsorber la longueur d'onde optique. Ainsi, une analyse de la réponse spectrale d'un échantillon gazeux permet d'identifier un ou plusieurs gaz constituants de cet échantillon. Un circuit de synchronisation (lock-in amplifier) 90, permet d'asservir le laser sur la fréquence de vibration du diapason, d'où il résulte que les vibrations du gaz se font à la fréquence propre du diapason. La détection se fait normalement par la mesure d'une tension qui se produit par effet piézoélectrique sur les bras du diapason à cause de sa mise en vibration.

Ce brevet expose les avantages de ce type de détection photoacoustique résonante et donne des exemples de fonctionnement à une longueur d'onde voisine de 1,66 $\mu$m. Toutefois, un tel appareil de détection de gaz dit QEPAS (Quartz Enhanced PhotoAcoustic Spectroscopy - spectroscopie photoacoustique renforcée par quartz) réalisé à partir d'éléments discrets reste limité à des applications de laboratoire. En effet :

- les matériaux utilisables avec des éléments discrets ont difficilement des longueurs d'onde de transmission supérieures à 2.5 $\mu$m alors qu'il serait souhaitable pour une analyse de gaz de fonctionner à des longueurs d'onde comprises dans un infrarouge plus lointain, dans une plage de 3 à 10 $\mu$m ;
- l'ensemble de l'appareil est sensible aux variations de température et aux vibrations qui peuvent perturber l'alignement ;
- la mise en oeuvre du système, à savoir le positionnement de ses éléments et leur alignement, doit être réalisée à l'aide de bancs optiques très précis de manipulation délicate ;
- il n'est pas possible avec un tel appareil de balayer une grande plage de longueurs d'onde et il est très difficile de remplacer la source laser.

Le document WO 2008/030250 décrit un dispositif monolitihique miniaturisé de détection photoacoustique à laser et diapason, travaillant à plusieurs fréquences distinctes.

Le document US 2005/210956 décrit un détecteur de gaz photoacoustique comprenant une pluralité de lasers susceptibles chacun d'émettre à une fréquence distincte.

Il existe donc un besoin pour des dispositifs de détection de gaz photoacoustiques palliant les inconvénients des appareils connus.

Résumé

Ainsi, un objet d'un mode de réalisation de la présente invention est prévoir un dispositif de détection photoacoustique ayant au moins certaines des caractéristiques suivantes :

- stabilité,
- insensibilité aux vibrations,
- grande précision,
- très petites dimensions,
- capacité à fonctionner à plusieurs longueurs d'onde comprises par exemple dans la plage de 3 à 10 $\mu$m,
- capacité à être facilement transporté et permettant de travailler pendant le transport.

La présente invention est définie dans les revendications indépendantes 1 et 12.

Un mode de réalisation de la présente invention prévoit un dispositif de détection photoacoustique comprenant un circuit nanophotonique incluant une pluralité de lasers à semiconducteur susceptibles d'émettre à des fréquences distinctes ; des coupleurs d'entrée reliés à des guides d'onde optiques ; un multiplexeur ; un guide d'onde optique de sortie dont l'extrémité est munie de moyens de focalisation, débouchant dans un évidement ; un diapason dont les bras libres sont disposés au niveau de la sortie des moyens de focalisation du guide d'onde optique de sortie ; et des moyens de détection de la vibration du diapason, tous ces éléments étant assemblés en un composant monolithique.

Selon un mode de réalisation de la présente invention, la structure comprenant l'ensemble des lasers est formée dans une puce rapportée sur un prolongement évidé du support du circuit nanophotonique.

Selon un mode de réalisation de la présente invention, la structure comprenant l'ensemble des lasers est formée directement dans un multicouche rapporté sur le support du circuit nanophotonique.

Selon un mode de réalisation de la présente invention, les lasers sont de type QCL.

Selon un mode de réalisation de la présente invention, les coeurs des guides d'onde optiques et les bras du diapason sont formés à partir d'une même couche de matériau.

Selon un mode de réalisation de la présente invention, la couche de matériau repose sur une structure de type semiconducteur sur isolant et, au niveau des guides d'onde, est revêtue d'un couche de gainage de même nature que la couche supérieure de la structure de type semiconducteur sur isolant et, au niveau des bras du diapason, est suspendue au dessus d'un évidement.

Selon un mode de réalisation de la présente invention, la couche semiconductrice supérieure de la structure de type semiconducteur sur isolant est une couche de silicium, et les coeurs des guides d'onde optique ainsi que les bras du diapason sont en germanium.

Selon un mode de réalisation de la présente invention, la surface supérieure de la couche de type semiconducteur sur isolant est revêtue d'une couche de nitrure de silicium, les coeurs des guides d'onde optiques et les bras du diapason sont en silicium et la couche de gainage est également une couche de nitrure de silicium.

Selon un mode de réalisation de la présente invention, le dispositif comprend en outre des moyens électroniques de détection des vibrations du diapason.

Selon un mode de réalisation de la présente invention, les moyens de détection mesurent les tensions produites par un effet piézoélectrique produit par le matériau du diapason.

Selon un mode de réalisation de la présente invention, les moyens de détection comprennent des électrodes couplées capacitivement aux bras du diapason.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

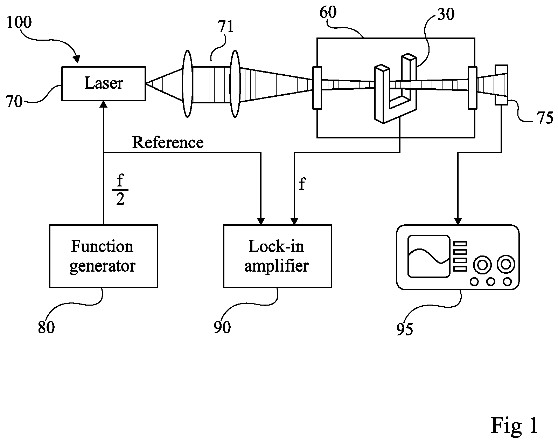

la figure 1 décrite précédemment reprend la figure 3 du brevet US 7 245 380 ;
la figure 2A est une vue de dessus schématique d'un dispositif de détection selon un mode de réalisation de la présente invention ;
la figure 2B est une vue en coupe selon le plan BB de la figure 2A ;
la figure 2C est une vue en coupe selon le plan CC de la figure 2A ;
la figure 2D est une vue en coupe selon le plan DD de la figure 2A ;
les figures 3A à 3D sont des vues en coupe illustrant des étapes successives d'un exemple de procédé de fabrication d'un dispositif de détection selon un mode de réalisation de la présente invention ; et
la figure 4 illustre une variante d'une étape du procédé de fabrication.

Comme cela est usuel dans la représentation des micro-composants, les diverses dimensions et notamment les épaisseurs de couche ne sont pas représentées à l'échelle. L'homme de l'art se référera à la littérature courante sur le sujet et/ou aux indications particulières données ci-après à titre d'exemple.

Description détaillée

Un mode de réalisation de la présente invention prévoit de réaliser un dispositif de détection photoacoustique sous forme monolithique. L'ensemble des composants micro-optiques, micro-mécaniques et micro-électroniques est réalisé sur un même support en utilisant des techniques de micro et nanofabrication typiques de la microélectronique et des microsystèmes mécaniques et électriques (MEMS). Ceci assure un degré de contrôle dimensionnel, une rigidité structurelle et une robustesse qui vont bien au-delà de ce que l'on peut obtenir avec un assemblage d'éléments discrets. L'intégration des différents composants sur un même substrat rend possible de contrôler précisément la température de l'ensemble du dispositif de détection en utilisant par exemple un refroidisseur à effet Peltier. Ceci est particulièrement important du fait que les sources lasers fonctionnant dans le moyen infrarouge, tels que des lasers dits à cascade quantique, sont généralement sensibles aux variations de température qui peuvent entraîner des décalages de longueur d'onde. En outre, réaliser sur un même support un amplificateur intégré à proximité des éléments optiques, acoustiques et électroniques permet de réduire le bruit en amplifiant des signaux faibles dans un amplificateur intégré dans le même dispositif. On obtient ainsi un gain considérable en rapport signal sur bruit. Enfin le dispositif, du fait de sa miniaturisation et de son caractère portable peut être utilisable dans des circonstances où un dispositif à éléments discrets ne pourrait pas être utilisé.

Plus particulièrement, le dispositif de détection comprend plusieurs sources laser intégrées qui peuvent être sélectivement activées et dirigées vers un même guide d'onde transmettant leur faisceau entre les bras d'un résonateur mécanique intégré. Ceci résout les problèmes d'alignement des appareils antérieurs.

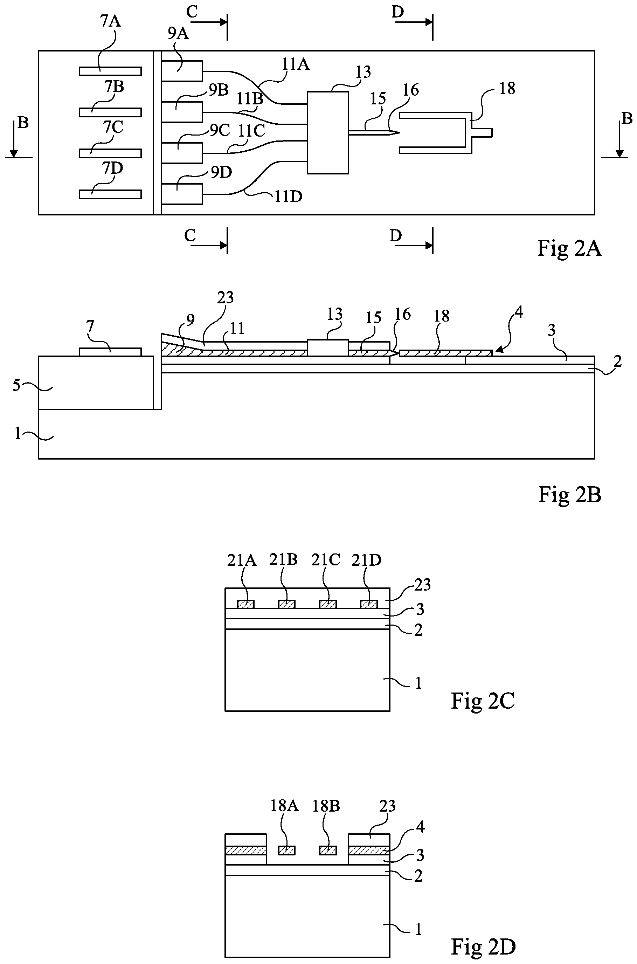

Les figures 2A à 2D représentent respectivement une vue de dessus, une vue en coupe selon le plan BB de la figure 2A, une vue en coupe selon le plan CC de la figure 2A et une vue en coupe selon le plan DD de la figure 2D d'un exemple de réalisation d'un microdétecteur selon la présente invention.

Il sera clair que ces figures sont extrêmement schématiques et sont uniquement destinées à bien faire comprendre un exemple de réalisation de la présente invention.

On décrira de façon générique l'ensemble des figures 2A à 2D dans lesquelles de mêmes références désignent de mêmes éléments.

L'ensemble de la structure est réalisée sur un substrat unique, par exemple une structure de type semiconducteur sur isolant comprenant un support 1, généralement une plaquette de silicium, une couche isolante 2, généralement de l'oxyde de silicium, et une couche semiconductrice monocristalline 3, dont on donnera des exemples ci-après.

Sur une partie évidée du support 1 est ramené un élément 5 sur lequel sont réalisés des lasers à semiconducteurs, de préférence de type QCL (Quantum Cascade Laser ou laser à cascade quantique). A titre d'exemple cet assemblage pourra se faire selon des techniques dites d'hybridation hétérogène couramment utilisées dans les technologies de micro et nanofabrication. On a représenté 4 lasers 7A à 7D, qui sont normalement réglés à des fréquences différentes comprises de préférence entre 3 et 10 $\mu$m. En pratique, on pourra utiliser un plus grand nombre de lasers, par exemple 6 lasers fonctionnant respectivement à des longueurs d'onde de 4.0, 4.2, 4.4, 4.6, 4.8, 5.0 $\mu$m pour couvrir la plage de 4 à 5 $\mu$m. Un avantage des lasers QCL réside dans leur capacité de miniaturisation et dans leur capacité de réglage en longueur d'onde d'émission, c'est-à-dire que chacun de ces lasers peut avoir une longueur d'onde légèrement variable autour de sa longueur d'onde de consigne, cet ajustement en longueur d'onde pouvant par exemple résulter du choix de courants de polarisation.

Selon une variante de réalisation de la présente invention les couches de matériaux nécessaires à la réalisation des lasers QCL sont transférées directement sur le support, par exemple par un procédé de collage moléculaire. Les lasers QCL seront alors réalisés directement sur le support final.

Les lasers émettent leur rayonnement vers des coupleurs respectifs 9A à 9D, par exemple de type coupleur conique (taper) tridimensionnel. Ces coupleurs couplent les faisceaux laser vers des guides d'onde optiques respectifs 11A à 11D connectés aux entrées d'un multiplexeur optique 13. Le multiplexeur renvoie la lumière incidente de chacun des guides d'onde d'entrée 11A à 11D vers un guide d'onde de sortie 15. Le guide d'onde 15 comporte de préférence une extrémité effilée 16 constituant un moyen de focalisation de façon à concentrer la lumière dans l'ouverture d'un diapason 18.

Selon un avantage de la présente invention, l'ensemble des composants 9 à 18 peut être simplement réalisé à partir d'un petit nombre de couches d'un circuit intégré nanophotonique.

Plus particulièrement, le coeur des guides d'onde 11 et 15 et les bras du diapason 18 sont formés à partir d'une même couche 4. Comme le montre plus particulièrement la figure 2C, chacun des guides d'onde 11A à 11D comprend un coeur, respectivement 21A, 21B, 21C, 21D, formé à partir d'une couche 4 déposée sur la couche semiconductrice 3 et revêtu d'une couche de gainage 23. De même, comme l'illustre la figure 2D, les bras 18A et 18B du diapason sont formés à partir de la même couche 4, une portion de la couche 3 étant éliminée sous les bras de ce diapason.

Selon un exemple de réalisation adapté à un fonctionnement dans une plage de longueurs d'onde comprise entre 3 et 10 $\mu$m où l'interaction lumière-gaz est maximale mais extensible à la gamme de longueurs d'onde dans le lointain infrarouge (jusqu'à 100 $\mu$m), la couche 3 de la structure de type semiconducteur sur isolant est une couche de silicium, les coupleurs, les coeurs des guides d'onde optique et les bras du diapason sont formés dans une couche 4 de germanium et la couche de gainage est également une couche de silicium. Etant donné que la couche de germanium et la couche de silicium de gainage sont obtenues par croissance au dessus d'une couche semiconductrice monocristalline, elles peuvent favorablement être des couches monocristallines.

Selon une variante de réalisation, la couche de gainage peut être l'air, le coeur de chaque guide d'onde et les bras du diapason pourront être en silicium, l'ensemble de la structure étant suspendu et tenu par une série de poutres de soutien. Cette réalisation est particulièrement adaptée à un fonctionnement dans une plage de longueurs d'onde étendue dans une plage de longueurs d'onde de 3 à 100 $\mu$m.

Selon une autre variante de réalisation, la couche de support de chaque coeur de guide d'onde peut être une couche de $Si_3N_4$, le coeur de chaque guide d'onde et les bras du diapason pourront être en silicium et la couche de gainage également en nitrure de silicium. Cette réalisation est particulièrement adaptée à un fonctionnement dans une plage de longueurs d'onde de 3 à 6 $\mu$m.

Le mode de fonctionnement de cette structure ne sera pas décrit en détail, car sur le plan des principes, il est identique à celui d'un système discret, avec l'avantage de pouvoir fonctionner simultanément avec plusieurs lasers intégrés, et de pouvoir fonctionner dans une grande plage de longueurs d'onde étant donné les caractéristiques spécifiques des guides d'onde intégrés.

L'analyse des vibrations du détecteur résultant de la création de vibrations acoustiques par le gaz recevant le faisceau laser entre les fourches du diapason pourra être faite par divers moyens. Par exemple, on pourra profiter du fait que les bras du diapason sont en un matériau piézoélectrique pour analyser directement le signal fourni par les éléments piézoélectrique.

D'autres moyens d'analyse sont également possible. Par exemple pour mesurer la vibration des fourches du diapason, on pourra disposer sous les bras du diapason des conducteurs électriques et analyser le signal résultant du couplage capacitif entre les bras du diapason et ces conducteurs électriques.

On comprendra qu'étant donnée l'utilisation d'une structure de type SOI, on pourra réaliser dans la même structure les divers composants électroniques destinés à l'amplification des signaux et à leur analyse.

Divers modes de réalisation avec diverses variantes ont été décrits ci-dessus. L'homme de l'art pourra combiner divers éléments de ces divers modes de réalisation et variantes sans faire preuve d'activité inventive.

A titre de variante ne faisant pas partie de la présente invention, au lieu d'être couplé aux guides d'onde 11 par des coupleurs 9, le laser 7 pourrait être disposé au dessus de ces guides d'onde et être couplé par ondes évanescentes.

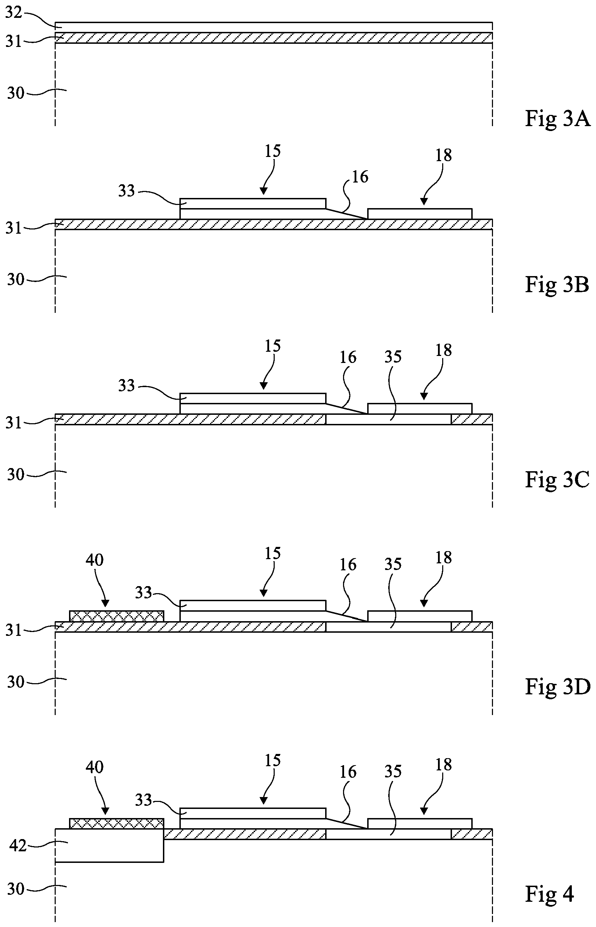

Les figures 3A à 3D sont des vues en coupe illustrant des étapes successives d'un exemple de procédé de fabrication d'un dispositif de détection selon un mode de réalisation de la présente invention.

La figure 3A représente un substrat 30 revêtu de deux couches minces 31 et 32. Cette structure peut correspondre à une plaquette de silicium sur isolant (SOI) où la couche 31 est généralement une couche d'oxyde de silicium et la couche 32 généralement une couche de silicium. On pourra néanmoins partir de tout substrat compatible avec une technologie de micro et nanofabrication. La couche 31 peut résulter du dépôt et/ou d'une croissance épitaxiale d'une couche d'un premier indice optique $n_{cl}$, typiquement du silicium, mais aussi par exemple $MgF_2$, $CaF_2$, $SrF_2$, $BaF_2$, $PbF_2$, CdF, GaAs, Al-GaAs, InP, InAs, InSb, ZnS, CdTe ou $Al_2O_3$. La couche 32 peut résulter de tout dépôt et/ou croissance épitaxiale d'une couche d'indice optique $n_c > n_{cl}$, typiquement du SiGe ou du Ge mais éventuellement également $MgF_2$, $CaF_2$, $SrF_2$, $BaF_2$, $PbF_2$, CdF, GaAs, AlGaAs, InP, InAs, InSb, ZnS, CdTe ou $Al_2O_3$. On notera que la couche 32 est notamment destinée à former le coeur d'un guide d'onde optique et $n_c$ désigne l'indice de ce coeur. La couche 31 est notamment destinée à former la couche de gainage optique (cladding) d'un guide d'onde optique, c'est pourquoi on désigne son indice par $n_{cl}$.

A l'étape illustrée en figure 3B, on grave la couche 32 pour réaliser des composants photoniques (guide, coupleur, multiplexeur, dispositif de focalisation si nécessaire). Avantageusement, ces motifs sont fabriqués par structuration d'une couche simple par photolithographie et gravure sélective. La taille des composants est choisie selon les règles connues par l'homme de l'art. Par exemple, pour le guide $1,5 < V < 2$ avec

$$V = \frac{2\pi}{\lambda} \cdot a \cdot nc \cdot \sqrt{\Delta}$$

et

$$\Delta = \frac{nc^2}{nc^2 - ncl^2} \approx \frac{\Delta n}{n},$$

a étant la demi-largeur du guide d'onde. Plus particulièrement, sur la figure 3B, on a représenté une première portion correspondant au diapason 18 et une deuxième portion correspondant au guide d'onde 15. La portion correspondant au guide d'onde 15 est revêtue d'une deuxième couche de gainage optique 33 d'indice $n_{cl2} < n_c$. Cette couche de gainage 33 sera typiquement en silicium et pourra être en $MgF_2$, $CaF_2$, $SrF_2$, $BaF_2$, $PbF_2$, CdF, GaAs, AlGaAs, InP, InAs, InSb, ZnS, CdTe ou $Al_2O_3$ de façon à définir la structure du guide. Avantageusement, le matériau de la deuxième couche de gainage 33 sera le même que celui choisi pour la première couche de gainage 31.

Lors de l'étape illustrée en figure 3B, on a également aminci la pointe de la pointe 16 du guide d'onde optique pour favoriser la concentration de lumière à l'entrée du diapason.

A l'étape illustrée en figure 3C, on a complété le détecteur photoacoustique 18 en formant un évidement 35 sous les parties mobiles de ce détecteur par masquage et gravure sélective d'une portion de la couche 31.

A l'étape suivante illustrée en figure 3D, on dispose du côté gauche de la figure un laser QCL 40. Ce laser peut être réalisé par transfert de multicouche constituant le milieu actif du QCL par collage moléculaire, le substrat ayant reçu la croissance multicouche (typiquement GaAs) est collé sur le substrat principal côté multicouche. Le GaAs est ensuite enlevé. Après cela, on met en forme la couche de la façon décrite par exemple dans la publication Apply Physic Letter 91 (2007) 231101 pour réaliser le laser QCL actif.

La figure 4 représente une alternative à la réalisation de la vue de la figure 3D, correspondant à ce qui a été décrit en relation avec la figure 2B. Dans ce cas, le substrat 30 est gravé pour accueillir une puce 42 contenant les différentes sources. Les lasers sont réalisés sur le substrat d'origine, la puce y est transférée, alignée et fixée par un montage en surface à billes ou par collage par formation d'eutectique, par exemple une couche d'or sur le substrat et une couche de Sn sur puce et un traitement thermique pour former un alliage Au-Sn.

**Revendications**

1. Dispositif de détection photoacoustique comprenant un circuit nanophotonique incluant :

   une pluralité de lasers (7) à semiconducteur susceptibles d'émettre à des fréquences distinctes en direction de coupleurs d'entrée respectifs (9) ;
   des guides d'onde optiques (11A-11D) reliés aux coupleurs ;
   un multiplexeur (13) relié auxdits guides d'onde ;
   un diapason (18);
   un guide d'onde optique (15) de sortie du multiplexeur débouchant dans un évidemment de manière à transmettre la lumière entre les bras libres du diapason: et
   des moyens de détection de la vibration du diapason, tous ces éléments étant assemblés en un composant monolithique, dans lequel les coeurs des guides d'onde optiques (11A-11D, 15) et les bras du diapason (18) sont formés à partir d'une même couche de matériau (4).

2. Dispositif selon la revendication 1, dans lequel ladite extrémité du guide d'onde de sortie est munie de moyens de focalisation (16).

3. Dispositif selon la revendication 1 ou 2, dans lequel la structure comprenant l'ensemble des lasers est formée dans une puce rapportée sur un prolongement évidé d'un support du circuit nanophotonique.

4. Dispositif selon la revendication 1 ou 2, dans lequel la structure comprenant l'ensemble des lasers est formée directement dans un multicouche rapporté sur un support du circuit nanophotonique.

5. Dispositif selon l'une quelconque des revendications 1 à 4, dans lequel les lasers sont de type QCL.

6. Dispositif selon la revendication 5, dans lequel ladite couche de matériau repose sur une structure de type semiconducteur sur isolant et, au-dessus des guides d'onde, est revêtue d'une couche de gainage de même nature que la couche supérieure de la structure de type semiconducteur sur isolant et, au niveau des bras du diapason, est suspendue au dessus d'un évidement.

7. Dispositif selon la revendication 1, dans lequel la couche semiconductrice supérieure de la structure de type semiconducteur sur isolant est une couche de silicium, et les coeurs des guides d'onde optiques ainsi que les bras du diapason sont en germanium.

8. Dispositif selon la revendication 6, dans lequel la surface supérieure de la couche de type semiconducteur sur isolant est revêtue d'une couche de nitrure de silicium, les coeurs des guides d'onde optiques et les bras du diapason sont en silicium et la couche de gainage est également une couche de nitrure de silicium.

9. Dispositif selon l'une quelconque des revendications 1 à 8, dans lequel les moyens de détection des vibrations du diapason sont des moyens électroniques.

10. Dispositif selon la revendication 9, dans lequel les moyens de détection mesurent les tensions produites par un effet piézoélectrique produit par le matériau du diapason.

11. Dispositif selon la revendication 9, dans lequel les moyens de détection comprennent des électrodes couplées capacitivement aux bras du diapason.

12. Procédé de fabrication d'un dispositif de détection photoacoustique selon la revendication 1, comprenant les étapes suivantes :

former sur un substrat (30) une première couche (31) et une deuxième couche (32), la première couche (31) étant choisie parmi les matériaux comprenant Si, $MgF_2$, $CaF_2$, $SrF_2$, $BaF_2$, $PbF_2$, CdF, GaAs, AlGaAs, InP, InAs, InSb, ZnS, CdTe et $Al_2O_3$, la deuxième couche (32) étant choisie par les matériaux comprenant $MgF_2$, $CaF_2$, $SrF_2$, $BaF_2$, $PbF_2$, CdF, GaAs, AlGaAs, InP, InAs, InSb, ZnS, CdTe et $Al_2O_3$ ;

graver la deuxième couche pour former des composants photoniques actifs et notamment les coeurs des guides d'ondes (11A-11D, 15) et le diapason (18) ;

réaliser une couche de gainage supérieure (33) au-dessus de l'élément de guide d'onde (15), choisie parmi les matériaux comprenant $MgF_2$, $CaF_2$, $SrF_2$, $BaF_2$, $PbF_2$, CdF, GaAs, AlGaAs, InP, InAs, InSb, ZnS, CdTe et $Al_2O_3$ ;

former une cavité en dessous du diapason ;

réaliser des lasers QCL et les insérer sur le substrat.

**Patentansprüche**

1. Photoakustische Detektionsvorrichtung, aufweisend eine nanophotonische Schaltung, die Folgendes aufweist:

eine Vielzahl von Halbleiterlasern (7), die geeignet sind mit unterschiedlichen Frequenzen zu jeweiligen Eingangskopplern (9) emittieren können;

Lichtwellenleiter (11A-11D), die mit den Kopplern verbunden sind;

einen Multiplexer (13), der mit den Wellenleitern verbunden ist;

eine Stimmgabel (18);

einen Ausgangs-Lichtwellenleiter (15), der in eine Ausnehmung mündet, um Licht zwischen die freien Armen der Stimmgabel zu senden; und Mittel zum Detektieren der Schwingung der Stimmgabel,

wobei alle der Elemente in einem monolithischen Bauteil zusammengesetzt sind, in dem die Kerne der Lichtwellenleiter (11A-11D, 15) und die Arme der Stimmgabel (18) aus einer gleichen Materialschicht (4) gebildet sind.

2. Die Vorrichtung nach Anspruch 1, wobei der Ausgang des Wellenleiters mit Fokussiermitteln (16) versehen ist.

3. Die Vorrichtung nach Anspruch 1 oder 2, wobei die Struktur, die sämtliche Laser aufweist, in einem Chip ausgebildet ist, der einer ausgehöhlten Verlängerung eines Trägers der nanophotonischen Schaltung hinzugefügt ist.

4. Die Vorrichtung nach Anspruch 1 oder 2, wobei die Struktur, die die sämtliche Laser aufweist, direkt in einem Multilayer ausgebildet ist, der auf einem Träger der nanophotonischen Schaltung hinzugefügt ist.

5. Vorrichtung nach einem der Ansprüche 1 bis 4, wobei die Laser des QCL-Typs sind.

6. Die Vorrichtung nach Anspruch 5, wobei die Materialschicht auf einer Struktur des Halbleiter-auf-Isolator-Typs ruht und oberhalb der Wellenleiter mit einer Umhüllungsschicht beschichtet ist, die der gleichen Art ist wie die obere Schicht der Struktur des Halbleiter-auf-Isolator-Typs und auf der Höhe der Stimmgabel über einer Aussparung aufgehängt ist.

7. Die Vorrichtung nach Anspruch 1, wobei die obere Halbleiterschicht der Struktur des Halbleiter-auf-Isolator-Typs eine Siliziumschicht ist und die Kerne der Lichtwellenleiter sowie die Arme der Stimmgabel aus Germanium bestehen.

8. Die Vorrichtung nach Anspruch 6, wobei die Oberseite der Struktur vom des Halbleiter-auf-Isolator-Typs mit einer Siliziumnitridschicht beschichtet ist, wobei die Kerne der Lichtwellenleiter und die Arme der Stimmgabel aus Silizium bestehen und wobei die Umhüllungsschicht ebenfalls eine Siliziumnitridschicht ist.

9. Vorrichtung nach einem der Ansprüche 1 bis 8, wobei die Mittel zum Detektieren der Schwingungen der Stimmgabel elektronische Mittel sind.

10. Die Vorrichtung nach Anspruch 9, wobei die Mittel zum Detektieren die Spannungen misst, die durch einen piezoelektrischen Effekt erzeugt werden, der durch das Material der Stimmgabel erzeugt wird.

11. Die Vorrichtung nach Anspruch 9, wobei die Mittel zum Detektieren Elektroden aufweisen, die kapazitiv mit den Armen der Stimmgabel gekoppelt sind.

12. Herstellungsverfahren für eine photoakustische Detektionsvorrichtung nach Anspruch 1, das die folgenden Schritte aufweist:

Ausbilden, auf einem Substrat (30), einer ersten Schicht (31) und einer zweiten Schicht (32), wobei die erste Schicht (31) ausgewählt ist aus den Materialien, die Si, $MgF_2$, $CaF_2$, $SrF_2$, $BaF_2$, $PbF_2$, CdF, GaAs, AlGaAs, InP, InAs, InSb, ZnS, CdTe und $Al_2O_3$ aufweisen, wobei die zweite Schicht (32) ausgewählt ist aus den Materialien, die $MgF_2$, $CaF_2$, $SrF_2$, $BaF_2$, $PbF_2$, CdF, GaAs, AlGaAs, InP, InAs, InSb, ZnS, CdTe und $Al_2O_3$ aufweisen;

Ätzen der zweiten Schicht zur Bildung aktiver photonischer Komponenten und insbesondere der Kerne der Wellenleiter (11A-11D, 15) und des Stimmgabelelements (18);

Ausbilden einer oberen Umhüllungsschicht (33) über dem Wellenleiterabschnitt (15), ausgewählt aus den Materialien, die $MgF_2$, $CaF_2$, $SrF_2$, $BaF_2$, $PbF_2$, CdF, GaAs, AlGaAs, InP, InAs, InSb, ZnS, CdTe und $Al_2O_3$ aufweisen;

Ausbilden eines Hohlraums unter der Stimmgabel;

Ausbilden von QCL-Lasern und Einsetzen derselben in das Substrat.

## Claims

1. A photoacoustic detection device comprising a nanophotonic circuit comprising:

a plurality of semiconductor lasers (7) capable of emitting at different frequencies towards respective input couplers (9);
optical waveguides (11A-11D) connected to the couplers;
a multiplexer (13) connected to said waveguides;
a tuning fork (18);
an output optical waveguide (15), emerging into a recess in order to transmit light between the free arms of the tuning fork; and
means for detecting the vibration of the tuning fork,
all these elements being assembled in a monolithic component in which the cores of the optical waveguides (11A-11D, 15) and the arms of the tuning fork (18) are formed from a same layer of material (4).

2. The device of claim 1, wherein the output of the waveguide is provided with focusing means (16).

3. The device of claim 1 or 2, wherein the structure comprising all the lasers is formed in a chip added on a hollowed extension of a support of the nanophotonic circuit.

4. The device of claim 1 or 2, wherein the structure comprising all the lasers is directly formed in a multilayer added on a support of the nanophotonic circuit.

5. The device of any of claims 1 to 4, wherein the lasers are of QCL type.

6. The device of claim 5, wherein said material layer rests on a structure of semiconductor-on-insulator type and is, above the waveguides, coated with a cladding layer of same nature as the upper layer of the structure of semiconductor-on-insulator type and, at the level of the tuning fork arms, suspended above a recess.

7. The device of claim 1, wherein the upper semiconductor layer of the structure of semiconductor-on-insulator type is a silicon layer, and the cores of the optical waveguides as well as the tuning fork arms are made of germanium.

8. The device of claim 6, wherein the upper surface of the structure of semiconductor-on-insulator type is coated with a silicon nitride layer, the cores of the optical waveguides and the arms of the tuning fork are made of silicon, and the cladding layer also is a silicon nitride layer.

9. The device of any of claims 1 to 8, wherein the means for detecting the vibrations of the tuning fork are electronic means.

10. The device of claim 9, wherein the detection means measure the voltages generated by a piezoelectric effect generated by the material of the tuning fork.

11. The device of claim 9, wherein the detection means comprise electrodes capacitively coupled to the arms of the tuning fork.

12. A manufacturing method of a photoacoustic detection device of claim 1, comprising the steps of:

forming on a substrate (30) a first layer (31) and a second layer (32), the first layer (31) being selected from among the materials comprising Si, $MgF_2$, $CaF_2$, $SrF_2$, $BaF_2$, $PbF_2$, CdF, GaAs, AlGaAs, InP, InAs, InSb, ZnS, CdTe, and $Al_2O_3$, the second layer (32) being selected from among the materials comprising $MgF_2$, $CaF_2$, $SrF_2$, $BaF_2$, $PbF_2$, CdF, GaAs, AlGaAs, InP, InAs, InSb, ZnS, CdTe, and $Al_2O_3$;
etching the second layer to form active photonic components and especially the cores of the waveguides(11A-11D, 15) and the tuning fork element (18);
forming an upper cladding layer (33) above the waveguide portion (15), selected from among the materials comprising $MgF_2$, $CaF_2$, $SrF_2$, $BaF_2$, $PbF_2$, CdF, GaAs, AlGaAs, InP, InAs, InSb, ZnS, CdTe, and $Al_2O_3$;
forming a cavity under the tuning fork;
forming QCL lasers and inserting them into the substrate.

Fig 1

Fig 2A

Fig 2B

Fig 2C

Fig 2D

32

31

30

Fig 3A

15
33    16    18

31

30

Fig 3B

15
33    16    35    18

31

30

Fig 3C

40    15
33    16    35    18

31

30

Fig 3D

40    15
33    16    35    18

42

30

Fig 4

## RÉFÉRENCES CITÉES DANS LA DESCRIPTION

**Documents brevets cités dans la description**

- US 7245380 B
- WO 2008030250 A

- US 2005210956 A

**Littérature non-brevet citée dans la description**

- *Apply Physic Letter,* 2007, vol. 91, 231101